# EUROPÄISCHE PATENTSCHRIFT

(11) **EP 0 967 568 B1**
(45) Veröffentlichungstag und Bekanntmachung des Hinweises auf die Patenterteilung: **30.08.2006**
(21) Anmeldenummer: 99108396.5
(22) Anmeldetag: 29.04.1999
(51) Int. Cl.: G06K 19/077

(54) **Identifizierungselement**
Identification element
Elément d'identification

(30) Priorität: 23.06.1998 DE 19827805; 08.08.1998 DE 19835965
(43) Veröffentlichungstag der Anmeldung: 29.12.1999
(73) Patentinhaber: Meto International GmbH, 69434 Hirschhorn/Neckar (DE)
(72) Erfinder: Altwasser, Richard, 76689 Neuthard (DE); Robson, David, Crowborough, East Sussex TN6 2HP (GB)
(74) Vertreter: Menges, Rolf

(56) Entgegenhaltungen:
- EP-A- 0 769 759
- FR-A- 2 753 305
- US-A- 5 574 470
- US-A- 5 608 417

## Beschreibung

Die Erfindung betrifft eine Antennenspule zur Verwendung in einen Identifizierungselement mit einem integrierten Schaltkreis, bestehend aus einer unteren Leiterbahn und einer oberen Leiterbahn, wobei beide Leiterbahnen jeweils eine Vielzahl von Windungen aufweisen und wobei zwischen den beiden Leiterbahnen eine dielektrische Schicht angeordnet ist. Außerdem betrifft die Erfindung das Identifizerungselement, in welchem die Antennenspule verwendet wird.

Identifizierungselemente mit einem integrierten Schaltkreis und einer mit dem integrierten Schaltkreis verbundenen Antennenspule werden als RFID-Transponder bezeichnet. Der Vorteil von RFID-Transpondern gegenüber den insbesondere im Bereich der Warenauszeichnung vornehmlich eingesetzten Barcodes besteht darin, dass sie einen direkten Austausch von Informationen erlauben, d. h., es ist kein Sichtkontakt zwischen Abfragevorrichtung und Transponder für die Informationsübermittlung erforderlich. Darüber hinaus ist es bei RFID-Transpondern im Gegensatz zu Barcodes problemlos möglich, deren Informationsinhalt bei Bedarf unmittelbar zu ändern.

RFID-Transponder können natürlich in den unterschiedlichsten Bereichen zur Anwendung kommen, insbesondere im Bereich der Herstellung, der Weiterverarbeitung und des Transports von Waren, ebenso im Bereich von Sicherheitsanwendungen. Beispielhaft seien genannt die Kennzeichnung von Menschen und Tieren, die Kennzeichnung von Gepäckstücken, insbesondere an Flughäfen oder bei der Post, die Kennzeichnung von Fahrzeugen bei der Fahrzeugherstellung oder in Parkhäusern.

Der Nachteil der bekannten RFID-Transponder gegenüber Barcodes besteht in einem eklatanten Preisunterschied beider Elemente. Dies ist auch der Grund dafür, dass RFID-Transponder bis heute auf dem Verkaufssektor nur in Randbereichen eingesetzt werden. Insbesondere wurde bislang von einer Bereitstellung von Preisinformation oder sonstiger Information mittels RFID-Transpondern bei Massenartikeln in Kaufhäusern und Lagern Abstand genommen, liegen doch die Kosten eines RFID-Transponders im Bereich ca. 5 EURO. Ihr Einsatz als Einwegkennzeichnung ist damit natürlich vollkommen indiskutabel.

RFID-Transponder sind entweder als passive oder als aktive Elemente ausgestaltet. Wird der RFID-Transponder als aktives Element verwendet, ist in dem Gehäuse, das den integrierten Schaltkreis einschließt, eine zusätzliche Energiequelle, üblicherweise in Form einer Batterie, enthalten. RFID-Transponder können in den unterschiedlichsten Frequenzbereichen arbeiten, z. B. im Niederfrequenzbereich bei 125 kHz, im mittleren Frequenzbereich bei 13,56 MHz oder im Mikrowellenbereich, typischerweise bei 2,45 GHz. Bei einer Ausgestaltung der Erfindung kommen vorzugsweise - aber keineswegs ausschließlich - passive Transponder zum Einsatz, die im mittleren Frequenzbereich arbeiten.

Aus der EP 0 682 321 A2 ist ein Datenträger mit einem integrierten Schaltkreis bekannt geworden. Der Datenträger besteht aus einem Kartenkörper und einem integrierten Schaltkreis, der elektrisch über Kontaktelemente mit wenigstens einer Spule verbunden ist, die aus einer oder aus mehreren Schichten aufgebaut ist. Die Elemente bilden zusammen einen Resonanzschwingkreis, der bei einer vorgegebenen Resonanzfrequenz arbeitet. Die Spule dient der Energieversorgung und/oder dem Datenaustausch des integrierten Schaltkreises mit externen Geräten. Schaltkreis und Kontaktelemente sind jeweils als separates Modul ausgestaltet.

Die Fertigungskosten dieser bekannten Ausgestaltung eines Datenträgers sind so hoch, dass er nur für Produkte der gehobenen Preisklassen eingesetzt werden kann. Für einen Einsatz bei Massenartikeln ist er völlig ungeeignet.

Ein Verfahren zur Kontaktierung eines integrierten Schaltkreises mit einem Resonanzschwingkreis, der auf einem flexiblen Träger angebracht ist, und ein entsprechender Transponder werden in der EP 0 821 406 A1 beschrieben. Der Resonanzschwingkreis wird aus zwei elektrisch leitfähigen Mustern gebildet, die zu beiden Seiten des flexiblen Trägers angeordnet sind. Der Resonanzschwingkreis hat eine gewisse Induktivität und eine gewisse Kapazität. Um eine gute Kontaktierung des integrierten Schaltkreises mit dem Resonanzschwingkreis zu gewährleisten, wird der Kontaktierungsbereich auf dem flexiblen Träger gereinigt. Anschließend wird der integrierte Schaltkreis über eine aus der Halbleitertechnik bekannte sog. Drahtverbindung (Wire-Bonding) mit dem Resonanzschwingkreis verbunden. Um zu verhindern, dass die Kontaktierung durch äußere Einwirkung wieder zerstört wird, werden der integrierte Schaltkreis und der Kontaktierungsbereich mit einer Schutzschicht überzogen.

Nachteilig sind auch bei diesem bekannten Verfahren bzw. dem bekannten Transponder die relativ hohen Kosten für die Einzelteile und für die Fertigung, ist es doch nach der Kontaktierung des integrierten Schaltkreises mit dem Resonanzschwingkreis unbedingt erforderlich, den Schaltkreis und den Kontaktierungsbereich mit einer Schutzschicht zu überziehen. Üblicherweise sind Transponder in Etiketten integriert. Da der Transponder im Bereich des Chips wesentlich dicker ist als in den übrigen Bereichen, führt dies zu erheblichen Problemen beim Bedrucken in z. B. einem thermischen Etikettendrucker. Weiterhin werden die den Resonanzschwingkreis bildenden, leitenden Muster durch Etchen auf den Träger aufgebracht. Etchen ist ein relativ teueres Verfahren, das darüber hinaus auch in hohem Maße die Umwelt belastet.

Aus dem Dokument US-A-5 608 417, auf dem der Oberbegriff des unabhängigen Anspruches 1 basiert, ist ferner ein Identifizierungselement bekannt, das aus einer aus zwei Leiterbahnen bestehenden Antennenspule, einem integrierten Schaltkreis und einer zwischen den beiden Leiterbahnen angeordneten dielektrischen Schicht besteht. Jede Leiterbahn weist dabei eine Vielzahl von Windungen auf, wobei die Windungen der beiden Leiterbahnen gegeneinander ausgerichtet sind, so dass eine gleichmäßig verteilte, hohe Kapazität und Induktivität zwischen den Leiterbahnen erreicht werden kann.

Der Erfindung liegt die Aufgabe zugrunde, eine kostengünstige und verlässlich arbeitende Antennenspule der eingangs genannten Art und ein Identifizierungselement, in welchem die Antennenspule verwendet wird, vorzuschlagen, wobei die Kapazität der Antennenspule in der Nähe des integrierten Schaltkreises konzentriert ist.

Die Aufgabe wird erfindungsgemäß hinsichtlich der Antennenspule und des Identifizierungselements dadurch gelöst, dass die beiden Leiterbahnen derart versetzt zueinander positioniert sind, dass sie sich im Endbereich ihrer äußeren Windungen und/oder im Anfangsbereich ihrer inneren Windungen überlappen und dass die übrigen Überlappungsbereiche, in denen sich die beiden Leiterbahnen kreuzen, nur unwesentliche Beiträge zur Gesamtkapazität liefern.

Die Vorzüge der erfindungsgemäßen Lösung liegen einerseits darin, dass die Induktivität der Antennenspule infolge der hohen Anzahl von Windungen bei beiden Leiterbahnen relativ hoch ist. Insbesondere lässt sie sich so bemessen, dass die Ausgangsspannung bei vorgegebenem Abfragefeld in einem vorgegebenen Raumbereich ausreicht, um den integrierten Schaltkreis zu aktivieren und zu betreiben. Andererseits führt die Ausgestaltung, dass die beiden Leiterbahnen im wesentlichen nur in den Anfangs- und/oder Endbereichen überlappen, dazu, dass der Hauptbeitrag der Kapazität der Antennenspule von diesen Bereichen beigesteuert wird, während die Beiträge von den verbleibenden Überlappungsbereichen (also den Bereichen, in denen sich die Leiterbahnen kreuzen) verschwindend gering sind. Hierdurch wird es möglich, dass bei der vorbestimmten Erregerfrequenz der Antennenspule eine höhere Induktivität und damit wieder eine höhere induzierte Spannung zum Betreiben des integrierten Schaltkreises des Identifizierungselements erreicht werden kann.

Gemäß einer bevorzugten Ausführungsform der Erfindung ist bei dem Identifizierungselement vorgesehen, dass der integrierte Schaltkreis verbunden ist mit der Antennenspule nach der Erfindung, vorzugsweise über eine elektrisch leidende Klebeverbindung. Bei der Klebeverbindung handelt es sich um sog. isotrope oder anisotrope Klebstoff-Verbindungen, welche aus der Halbleiterfertigung bestens bekannt sind. Dieses Kontaktierungsverfahren ist sehr kostengünstig. Für die verwendeten Chips ohne Gehäuse und die beschriebene Antennenspule, die aus ausgestanzten Leiterbahnen gefertigt ist, ist es darüber hinaus problemlos anwendbar und somit bestens geeignet.

Gemäß einer vorteilhaften Weiterbildung des erfindungsgemäßen Identifizierungselements ist vorgesehen, dass es sich bei dem integrierten Schaltkreis um einen Chip ohne Gehäuse handelt. Dies stellt natürlich eine äußerst kostengünstige Lösung dar. Ist das Identifizierungselement in ein Etikett integriert, so wird darüber hinaus das Bedrucken in z. B. einem thermischen Drucker wesentlich erleichtert, da die Dicke eines Chips ohne Gehäuse wesentlich geringer ist als die eines Chips mit Gehäuse.

Vorzugsweise handelt es sich bei den Leiterbahnen der Antennenspule nach der Erfindung um aus einer Metallfolie ausgestanzte Teile. Ein Verfahren, Resonanzetiketten sehr kostengünstig herzustellen, ist aus der EP 0 655 705 A1 bereits bekannt geworden. Das in dieser Schrift offenbarte Fertigungsverfahren wird hiermit ausdrücklich zum Offenbarungsgehalt der vorliegenden Erfindung, insbesondere zur Fertigung der Antennenspule, hinzugerechnet.

Gemäß einer vorteilhaften Ausgestaltung der erfindungsgemäßen Antennenspule wird vorgeschlagen, dass die dielektrische Schicht aus einem dielektrischen Kleber besteht. Diese Ausgestaltung ist gleichfalls bereits in der EP 0 655 705 A1 beschrieben.

Die Betriebsspannung des integrierten Schaltkreises, sprich des Chips ohne Gehäuse, liegt bei ca. 2 Volt. Gemäß einer vorteilhaften Ausgestaltung der erfindungsgemäßen Antennenspule ist vorgesehen, dass die Anzahl der Windungen der Leiterbahnen, die proportional zur Induktivität der Antennenspule und damit zur induzierten Spannung ist, und die Größe des Anfangs- und/oder Endbereichs, in dem sich die Leiterbahnen überlappen, so gewählt sind, dass die Ausgangsspannung der Antennenspule bei vorgegebenem Abfragefeld in einem vorgegebenen Raumbereich im Volt-Bereich liegt.

Um Fertigungstoleranzen auszugleichen, sieht eine günstige Ausführungsform der erfindungsgemäßen Antennenspule vor, dass die Antennenspule nach Fertigstellung durch Wärme- und Druckbeaufschlagung im Anfangs- und/oder Endbereich auf die gewünschte Resonanzfrequenz abstimmbar ist. Vorzugsweise erfolgt die Abstimmung dadurch, dass der Abstand zwischen den beiden Leiterbahnen im Überlappungsbereich mittels eines aufheizbaren Stößels so eingestellt wird, dass die für das Aktivieren des integrierten Schaltkreises erforderliche Resonanzfrequenz von der Antennenspule geliefert wird. Es ist durchaus möglich, eine derartige Feinabstimmung auch dann noch vorzunehmen, wenn der integrierte Schaltkreis mit der Antennenspule bereits kontaktiert ist.

Eine vorteilhafte Ausgestaltung der erfindungsgemäßen Antennenspule sieht vor, dass die beiden Leiterbahnen der Antennenspule im Wesentlichen die gleichen Abmessungen aufweisen und dass die Leiterbahnen gegensinnig zueinander gewickelt sind.

Vorzugsweise weist des Weiteren der Endbereich der äußeren Windung und der Anfangsbereich der inneren Windung von zumindest einer der beiden Leiterbahnen eine größere Breite auf als die restlichen Leiterbahn-Bereiche. Wie bereits an vorhergehender Stelle erwähnt, liegen die ausgewählten Überlappungsbereiche in diesen Anfangs- und/oder Endbereichen der Antennenspule. Da diese Bereiche eine größere Breite aufweisen als die übrigen Bereiche der Leiterbahnen, kommt es zu einer Konzentration der Kapazität in dem entsprechenden Überlappungsbereich. In der Nähe des Überlappungsbereichs ist auch der Chip bzw. der integrierte Schaltkreis mit der Antennenspule verbunden. Eine konzentrierte Gesamtkapazität ist wesentlich günstiger als eine Gesamtkapazität, die sich als Summe einer Vielzahl von Einzelkapazitäten darstellt, da sich die Gesamtkapazität und damit die Energie zum Betreiben des integrierten Schaltkreises so auf einfache Weise dort konzentrieren lässt, wo sie gebraucht wird, nämlich in Nähe des Chips.

Gemäß einer vorteilhaften Ausgestaltung der Antennenspule nach der Erfindung ist vorgesehen, dass die beiden Leiterbahnen in einem der beiden Überlappungsbereiche, vorzugsweise in den Endbereichen der beiden äußeren Windungen, elektrisch miteinander verbunden sind.

Gemäß einer vorteilhaften Ausführungsform des Identifizierungselements, bei dem der integrierte Schaltkreis verbunden ist mit einer Antennenspule nach der Erfindung, ist ein Transponder oder Chip zwischen den beiden inneren Windungen der beiden Leiterbahnen im Bereich einer mittleren Achse des Identifizierungselements angeordnet. Diese Ausgestaltung ist insbesondere zusammen mit der nachfolgend beschriebenen Weiterbildung des Identifizierungselements von großem Vorteil. Gemäß dieser Weiterbildung ist nämlich vorgesehen, dass zwischen den beiden Leiterbahnen und außerhalb des Bereichs, in dem der Chip angeordnet ist, eine zusätzliche dielektrische Schicht vorgesehen ist. In einer weiteren Ausgestaltung des Identifizierungselements handelt es sich bei der dielektrischen Schicht um zwei Bahnen einer dielektrischen Folie, die vorzugsweise aus Polyester gefertigt sind. Diese Folie vergrößert den Abstand zwischen den beiden Leiterbahnen und verhindert so, dass in den Überlappungsbereichen der beiden Leiterbahnen ein Kurzschluss auftritt, der die Antennenspule deaktivieren würde.

Die Erfindung wird anhand der nachfolgenden Figuren näher erläutert. Es zeigt:
- Fig. 1:: eine Draufsicht auf die untere Leiterbahn einer erfindungsgemäßen Antennenspule,
- Fig. 2:: eine Draufsicht auf die obere Leiterbahn der Antennenspule,
- Fig. 3:: eine Draufsicht auf eine Ausgestaltung eines Identifizierungselements und
- Fig. 4:: eine Draufsicht auf eine weitere Ausgestaltung eines Identifizierungselements.

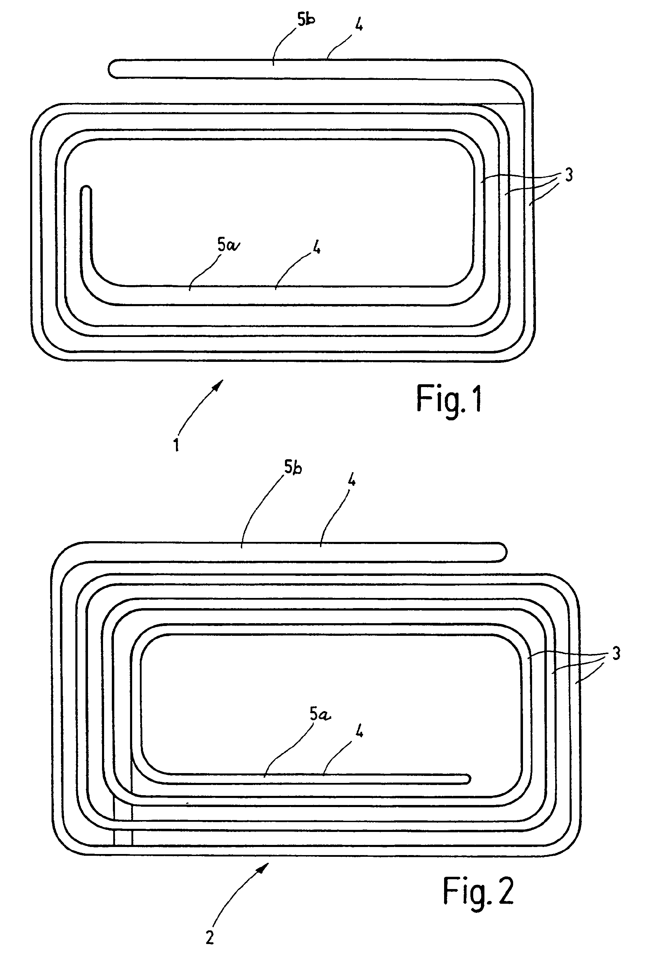

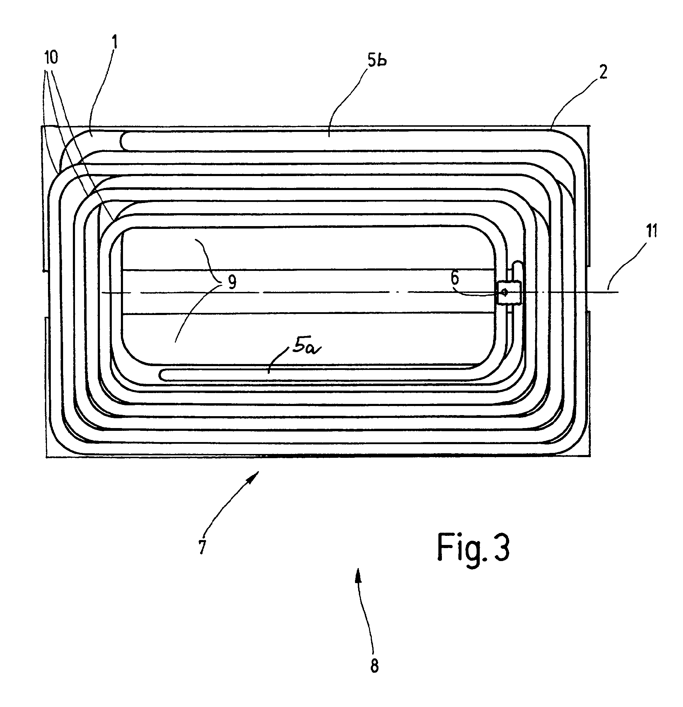

Fig. 1 zeigt eine Draufsicht auf die untere Leiterbahn 1 einer erfindungsgemäßen Antennenspule 7. Während die untere Leiterbahn 1 nahezu drei Windungen 3 hat, weist die obere Leiterbahn 2 - wie aus der Draufsicht in Fig. 2 zu sehen ist - nahezu vier Windungen 3 auf. Folge der relativ hohen Windungszahl ist eine hohe Induktivität und letztlich die Bereitstellung einer ausreichend hohen induzierten Spannung zur Aktivierung des integrierten Schaltkreises 6. Die beiden Leiterbahnen 1, 2 sind übrigens entgegengesetzt gewickelt. Fig. 3 zeigt ein fertiges Identifizierungselement 8, das aus den beiden Leiterbahnen 1, 2 zusammengesetzt ist.

Der Anfangsbereich 5a und der Endbereich 5b der unteren Leiterbahn 1 sowie der Endbereich 5b der oberen Leiterbahn 2 haben eine größere Breite als die übrigen Bereiche der Leiterbahnen 2, 3. Vorzugsweise sind beide Leiterbahnen 1, 2 aus einer Metallfolie, insbesondere einer Aluminiumfolie, ausgestanzt. Selbstverständlich könnte die Folie auch aus einem anderen leitfähigen Metall gefertigt sein, z. B. aus Kupfer.

Zwecks Bildung der Antennenspule 7 ist zwischen den beiden Leiterbahnen 1, 2 eine dielektrische Schicht 4 angeordnet. Die beiden Leiterbahnen 1, 2 sind derart zueinander positioniert, dass sie sich im wesentlichen nur in den Anfangs- und/oder Endbereichen 5a, 5b überlappen. Gemäß einer bevorzugten Ausgestaltung sind die beiden Leiterbahnen 1, 2 im Endbereich 5b der äußeren Windungen 3 elektrisch miteinander kontaktiert. Im einfachsten Fall erfolgt die Kontaktierung über ein Durchstanzen der beiden Leiterbahnen im Endbereich 5b. Andere Methoden der Kontaktierung sind jedoch ebenfalls anwendbar.

Bei der dielektrischen Schicht 4, die zwischen den beiden Leiterbahnen 1, 2 angeordnet ist, handelt es sich vorzugsweise um einen dielektrischen Heißkleber. Die dielektrische Schicht 4 isoliert die beiden Leiterbahnen 1, 2 elektrisch voneinander. Durch die versetzte Positionierung der beiden Leiterbahnen 1, 2 wird erreicht, dass der Hauptanteil der Kapazität aus den Überlappungsbereichen 5a, 5b kommt, während die übrigen Überlappungsbereiche 10, in denen sich die beiden Leiterbahnen 1, 2 kreuzen, nur unwesentliche Beiträge zur Gesamtkapazität liefern. Durch diese Ausgestaltung wird die Kapazität und damit die Energie der Antennenspule 7 in dem Bereich konzentriert, in dem sie benötigt wird, nämlich in unmittelbarer Nachbarschaft zu dem Chip.

Der integrierte Schaltkreis 6, also der vorzugsweise gehäuselose Chip, ist zwischen dem Endbereich 5b der unteren Leiterbahn 1 und dem Endbereich 5b der oberen Leiterbahn 2 in unmittelbarer Nähe der mittleren Achse 11 der Antennenspule 6 angeordnet.

Die Kontaktierung zwischen Chip und Leiterbahnen 1, 2 erfolgt bevorzugt mittels des sog. FlipChip-Bonding Verfahrens, also über einen elektrisch leitenden Kleber. Selbstverständlich sind auch die weiteren aus der Halbleiterfertigung bekannt gewordenen Kontaktierungsmethoden im Zusammenhang mit der vorliegenden Erfindung anwendbar.

Um zu verhindern, dass in den Überlappungsbereichen 11 ein Kurzschluss auftritt, der die Antennenspule 7 und damit das Identifizierungselement 8 deaktivieren würde, ist zumindest in diesen Bereichen 11 eine zusätzliche dielektrische Folie 9 oder eine sonstige zusätzliche dielektrische Schicht vorgesehen.

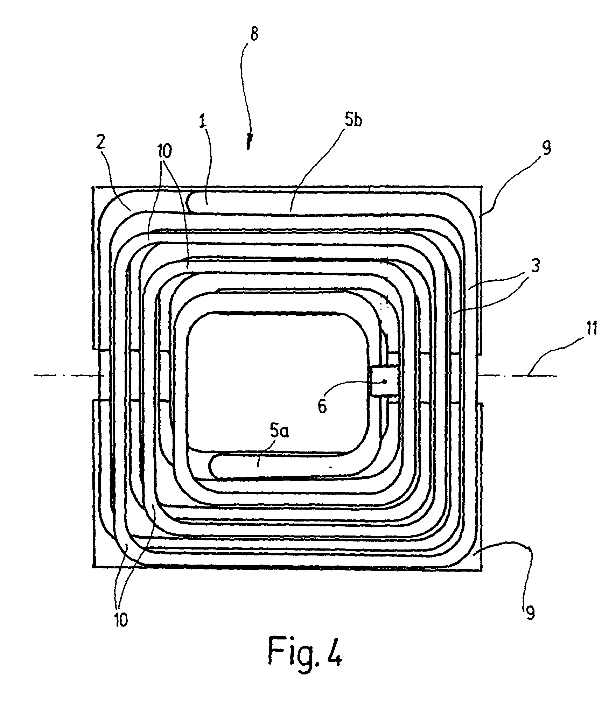

In Fig. 4 ist eine weitere Ausgestaltung des Identifizierungselements 8 zu sehen. Es unterscheidet sich von dem in den vorherigen Figuren dargestellten Identifizierungselement 8 nur im Design.

### Bezugszeichenliste

- 1: untere Leiterbahn
- 2: obere Leiterbahn
- 3: Windung
- 4: dielektrische Schicht
- 5a: Überlappungsbereich / Anfangsbereich
- 5b: Überlappungsbereich / Endbereich
- 6: integrierter Schaltkreis
- 7: Antennenspule
- 8: Identifizierungselement
- 9: dielektrische Folie
- 10: Überlappungsbereich
- 11: mittlere Achse

## Patentansprüche

1. Antennenspule (7) zur Verwendung in einem Identifizierungselement (8) mit einem integrierten Schaltkreis, bestehend aus einer unteren Leiterbahn (1) und einer oberen Leiterbahn (2) wobei beide Leiterbahnen (1, 2) jeweils eine Vielzahl von Windungen (3) aufweisen und wobei zwischen den beiden Leiterbahnen (1, 2) eine dielektrische Schicht (4) angeordnet ist,
**dadurch gekennzeichnet, dass** die beiden Leiterbahnen (1, 2) derart versetzt zueinander positioniert sind, dass sie sich im Endbereich (5b) ihrer äußeren Windungen und/oder im Anfangsbereich (5a) ihrer inneren Windungen überlappen, und dass die übrigen Überlappungsbereiche (10), in denen sich die beiden Leiterbahnen (1, 2) kreuzen, nur unwesentliche Beiträge zur Gesamtkapazität liefern.

2. Identifizierungselementmit einem integrierten Schaltkreis, wobei der integrierte Schaltkreis verbunden ist mit einer Antennenspule (7) nach Anspruch 1, vorzugsweise über eine elektrisch leitende Klebeverbindung.

3. Identifizierungselement nach Anspruch 2, **dadurch gekennzeichnet, dass** es sich bei dem integrierten Schaltkreis um einen Chip (6) ohne Gehäuse handelt.

4. Antennenspule nach Anspruch 1, **dadurch gekennzeichnet,**
**dass** es sich bei den Leiterbahnen (1, 2) um aus einer Metallfolie ausgestanzte Teile handelt.

5. Antennenspule nach Anspruch 1, **dadurch gekennzeichnet,**
**dass** die dielektrische Schicht (4) aus einem dielektrischen Kleber besteht.

6. Antennenspule nach Anspruch 1, 4 oder 5, **dadurch gekennzeichnet, dass** die Anzahl der Windungen (3) der Leiterbahnen (1, 2), die die Induktivität der Antennenspule (7) bestimmt, und die Größe des Anfangs- und/oder Endbereichs (5a, 5b), in dem sich die Leiterbahnen (1, 2) überlappen, so gewählt sind, dass die Ausgangsspannung der Antennenspule (7) bei vorgegebenem Abfragefeld in einem vorgegebenen Raumbereich im Volt-Bereich liegt.

7. Antennenspule nach Anspruch 1 oder 6, **dadurch gekennzeichnet,**
**dass** die Antennenspule (7) nach Fertigstellung durch Wärme- und Druckbeaufschlagung im Anfangs- und/oder Endbereich (5a; 5b) auf die gewünschte Resonanzfrequenz abstimmbar ist.

8. Antennenspule nach einem oder mehreren der vorhergehenden Ansprüche, **dadurch gekennzeichnet, dass** die beiden Leiterbahnen (1, 2) der Antennenspule (7) im wesentlichen die gleichen Abmessungen aufweisen und dass die Leiterbahnen (1, 2) zueinander gegensinnig gewickelt sind.

9. Antennenspule nach Anspruch 1 oder 7, **dadurch gekennzeichnet, dass** der Endbereich (5b) der äußeren Windung (3) und der Anfangsbereich (5a) der inneren Windung (3) von zumindest einer der beiden Leiterbahnen (1; 2) eine größere Breite aufweist als die restlichen Bereiche der entsprechenden Leiterbahn (1; 2).

10. Antennenspule nach Anspruch 1 oder 9, **dadurch gekennzeichnet, dass** die beiden Leiterbahnen (1, 2) in einem der beiden Überlappungsbereiche, vorzugsweise in den Endbereichen (5b) der beiden äußeren Windungen (3) elektrisch miteinander verbunden sind.

11. Identifizierungselement mit einem integrierten Schaltkreis enthaltenden Transponder oder Chip wobei der integrierte Schaltkreis verbunden ist mit einer Antennenspule (7) nach Anspruch 1 oder Anspruch 10, **dadurch gekennzeichnet, dass** der Transponder oder Chip zwischen den beiden inneren Windungen (3) der beiden Leiterbahnen (1, 2) im Bereich einer mittleren Achse (11) des Identifizierungselements (8) angeordnet ist.

12. Identifizierungselement nach Anspruch 11, **dadurch gekennzeichnet, dass** zwischen den beiden Leiterbahnen (1, 2) und außerhalb des Bereichs, in dem der Transponder oder Chip (6) angeordnet ist, eine zusätzliche dielektrische Schicht (9) vorgesehen ist.

13. Identifizierungselement nach Anspruch 12, **dadurch gekennzeichnet, dass** es sich bei der dielektrischen Schicht um zwei Bahnen (9) einer dielektrischen Folie handelt, die vorzugsweise aus Polyester gefertigt sind.

## Claims

1. An antenna coil (7) for use in an identification element (8) having an integrated circuit, consisting of a lower conducting track (1) and an upper conducting track (2), each of said conducting tracks (1, 2) including a plurality of turns (3) and with a dielectric layer (4) being interposed between the two conducting tracks (1, 2),
**characterized in that** the two conducting tracks (1, 2) are positioned in an offset relation to each other, such as to overlap in the end area (5b) of their outer turns and/or in the starting area (5b) of their inner turns, and that the remaining areas of overlap (10) in which the conducting tracks (1, 2) intersect contribute to the total capacitance in insignificant amounts only.

2. An identification element having an integrated circuit, wherein the integrated circuit is connected to an antenna coil (7) according to claim 1, preferably through an electrically conducting adhesive bond.

3. The identification element according to claim 2,
**characterized in that** the integrated circuit is a non-encapsulated chip (6).

4. The antenna coil according to claim 1,
**characterized in that** the conducting tracks (1, 2) are parts which are die-stamped from a metal foil.

5. The antenna coil according to claim 1,
**characterized in that** the dielectric layer (4) is made from a dielectric adhesive.

6. The antenna coil according to claim 1, 4 or 5,
**characterized in that** the number of turns (3) of the conducting tracks (1, 2), which number determines the inductance of the antenna coil (7), and the size of the starting and/or end area (5a, 5b) in which the conducting tracks (1, 2) overlap, are selected such that the output voltage of the antenna coil (7) is in the volt range given a predetermined interrogation field in a predetermined space.

7. The antenna coil according to claim 1 or 6,
**characterized in that** the antenna coil (7), following manufacture, is tunable to the desired resonant frequency by the application of heat and pressure in the starting and/or end area (5a; 5b).

8. The antenna coil according to one or several ones of the preceding claims,
**characterized in that** the two conducting tracks (1, 2) of the antenna coil (7) are of essentially like dimensions and the conducting tracks (1, 2) are wound in opposing directions.

9. The antenna coil according to claim 1 or 7,
**characterized in that** the end area (5b) of the outer turn (3) and the starting area (5a) of the inner turn (3) of at least one of the two conducting tracks (1; 2) has a greater width than the remaining areas of the corresponding conducting track (1; 2).

10. The antenna coil according to claim 1 or 9,
**characterized in that** the two conducting tracks (1, 2) are electrically interconnected in one of the two areas of overlap, preferably in the end areas (5b) of the two outer turns (3).

11. An identification element with a transponder or chip containing an integrated circuit, wherein the integrated circuit is connected to an antenna coil (7) according to claim 1 or claim 10, **characterized in that** the transponder or chip is located between the two inner turns (3) of the two conducting tracks (1, 2) in the area of a center axis (11) of the identification element (8).

12. The identification element according to claim 11, **characterized in that** provision is made for an additional dielectric layer (9) between the two conducting tracks (1, 2) and outside the area in which the transponder or chip (6) is located.

13. The identification element according to claim 12, **characterized in that** the dielectric layer is comprised of two webs (9) of a dielectric foil which are preferably made of polyester.

## Revendications

1. Bobine-antenne (7) destinée à être utilisée dans un élément d'identification (8) à circuit intégré, constituée d'une voie conductrice inférieure (1) et d'une voie conductrice supérieure (2), les deux voies conductrices (1, 2) comportant respectivement une pluralité de spires (3), et une couche diélectrique (4) étant agencée entre les deux voies conductrices (1, 2), **caractérisée en ce que** les deux voies conductrices (1, 2) sont positionnées en étant décalées l'une par rapport à l'autre de telle sorte qu'elles se chevauchent dans la zone d'extrémité (5b) de leurs spires extérieures et/ou dans la zone de début (5a) de leurs spires intérieures, et **en ce que** les autres zones de chevauchement (10), dans lesquelles les deux voies conductrices (1, 2) se croisent, ne contribuent que de façon négligeable à la capacité d'ensemble.

2. Elément d'identification à circuit intégré, le circuit intégré étant relié à une bobine-antenne (7) selon la revendication 1, de préférence par l'intermédiaire d'une liaison collée électriquement conductrice.

3. Elément d'identification selon la revendication 2, **caractérisé en ce que**, en ce qui concerne le circuit intégré, il s'agit d'une puce (6) sans boîtier.

4. Bobine-antenne selon la revendication 1, **caractérisée en ce que**, en ce qui concerne les voies conductrices (1, 2), il s'agit de parties estampées à partir d'un film métallique.

5. Bobine-antenne selon la revendication 1, **caractérisée en ce que** la couche diélectrique (4) est constituée d'une colle diélectrique.

6. Bobine-antenne selon la revendication 1, 4 ou 5, **caractérisée en ce que** le nombre de spires (3) des voies conductrices (1, 2), qui définit l'inductance de la bobine-antenne (7), et la dimension des zones de début et/ou d'extrémité (5a, 5b) dans lesquelles les voies conductrices (1, 2) se chevauchent, sont choisis de telle sorte que, lors du passage dans un champ d'exploration prédéterminé dans une zone d'espace prédéterminée, la tension de sortie de la bobine-antenne (7) se situe dans la plage des volts.

7. Bobine-antenne selon la revendication 1 ou 6, **caractérisée en ce que**, après la finition, la bobine-antenne (7) peut être accordée à la fréquence de résonance souhaitée par l'action de chaleur et de pression dans les zones de début et/ou d'extrémité (5a ; 5b).

8. Bobine-antenne selon l'une ou plusieurs des revendications précédentes, **caractérisée en ce que** les deux voies conductrices (1, 2) de la bobine-antenne (7) ont sensiblement les mêmes dimensions, et **en ce que** les voies conductrices (1, 2) sont enroulées dans des sens opposés l'une par rapport à l'autre.

9. Bobine-antenne selon la revendication 1 ou 7, **caractérisée en ce que** la zone d'extrémité (5b) de la spire extérieure (3) et la zone de début (5a) de la spire intérieure (3) de l'une au moins des deux voies conductrices (1 ; 2) sont plus larges que les autres zones de la voie conductrice (1 ; 2) correspondante.

10. Bobine-antenne selon la revendication 1 ou 9, **caractérisée en ce que** les deux voies conductrices (1, 2) sont reliées électriquement entre elles dans l'une des deux zones de chevauchement, de préférence dans les zones d'extrémité (5b) des deux spires extérieures (3).

11. Elément d'identification avec un transpondeur ou une puce contenant un circuit intégré, le circuit intégré étant relié à une bobine-antenne (7) selon la revendication 1 ou la revendication 10, **caractérisé en ce que** le transpondeur ou la puce est agencé entre les deux spires intérieures (3) des deux voies conductrices (1, 2) dans la zone d'un axe médian (11) de l'élément d'identification (8).

12. Elément d'identification selon la revendication 11, **caractérisé en ce qu'**une couche diélectrique (9) supplémentaire est prévue entre les deux voies conductrices (1, 2), et en dehors de la zone dans laquelle est agencé le transpondeur ou la puce (6).

13. Elément d'identification selon la revendication 12, **caractérisé en ce que**, en ce qui concerne la couche diélectrique, il s'agit de deux voies (9) d'un film diélectrique qui est de préférence réalisé en polyester.
